# EUROPEAN PATENT APPLICATION

(11) **EP 4 790 360 A1**
(43) Date of publication of application: **12.08.2026**
(21) Application number: 26156237.5
(22) Date of filing: 04.02.2026
(51) Int. Cl.: G01B 11/25, G06T 7/521

(54) **APPARATUS AND METHOD FOR MEASURING 3D SHAPES OF OBJECTS USING EVENT BASED CAMERA**

(30) Priority: 05.02.2025 JP 2025017389
(71) Applicant: DENSO WAVE INCORPORATED, Chita-gun, Aichi-pref. 470-2297 (JP)
(72) Inventor: TSUJIMOTO, Masataka, Chita-gun, Aichi-pref., 470-2297 (JP)
(74) Representative: Kuhnen & Wacker Patent- und Rechtsanwaltsbüro PartG mbB

(57) **Abstract**

A three-dimensional measurement apparatus (10) includes a light projection device (20) projecting a line-shaped light pattern (P) onto an object (R), an imaging unit (30) two-dimensionally imaging the object, pixel by pixel, at irregular intervals; and a measurement unit (40) measuring a three-dimensional shape of the object based on image data of the object by applying a light-sectioning method to the image data. In the imaging unit, an imaging element (302) has previously set two-dimensional coordinate positions and outputs event data including positive-polarity event data. In the measurement unit, selected positive-polarity event data for the measurement are provided, pixel by pixel, by removing, among the plurality of positive-polarity event data, first positive-polarity event data (e.g., data at ts2) immediately followed by second positive-polarity event data (e.g., data ts3) with a time difference (ΔTs) between the first and second positive-polarity event data, the time difference (ΔTs) being less than or equal to a predetermined threshold (ΔTsth).

## Description

### Background

### [Technical Field]

The present invention relates to a three-dimensional measurement apparatus and a three-dimensional measurement method that are configured to measure three-dimensional shapes of object being measured.

### [Related Art]

Conventionally, apparatuses which utilize the phase shift method are known, for example, as 3D measurement apparatus for measuring the three-dimensional shapes of objects being measured. The phase shift method is a technique for performing three-dimensional measurement on an object being measured, by projecting multiple striped light patterns with phases shifted one from others.

Concerning the technology for performing three-dimensional measurement using the phase shift method, a 3D measurement apparatus disclosed in the following Patent Document 1 is known in which images of the measurement object are generated at a higher speed.

This 3D measurement apparatus employs a sine wave light pattern serving as a predetermined striped light pattern for the phase shift method, alongside an event camera that outputs event data. This data includes two-dimensional point data, which identifies the position of pixels corresponding to those exhibiting luminance changes upon light reception. Through this implementation, an image of the object being measured, onto which the striped light pattern is projected, is generated from the event data.

The event camera has the characteristic of not outputting pixel information without luminance changes, i.e., redundant data (event data), unlike conventional cameras. This enables the benefits of reduced data communication volume and lighter image processing to be enjoyed. Thus, information regarding the shape of the object being measured can be acquired more rapidly.

On the other hand, the event data does not contain the luminance information to be used in the phase shift method. Thus, by determining the luminance information (striped light pattern information) based on the time difference between the occurrence time of the positive polarity event data (positive luminance change) outputted during illumination and the occurrence time of the negative polarity event data (negative luminance change) outputted during deactivation, it is possible to measure the three-dimensional shape of an object using such event data.

### [Prior Art Reference]

### [Patent Documents]

[Patent Reference 1] JP 2021-067644 A

Other three-dimensional measurements which operate on the foregoing event data are also provided. Specifically, this three-dimensional measurement method involves imaging an object being measured with an event camera while projecting a line-shaped light pattern to scan the object. Furthermore, this three-dimensional measurement method utilizes the event data outputted at each pixel of the imaging element during the passage of the line-shaped light pattern over the object, thereby making the light sectioning method measure the three-dimensional shape of the object.

By imaging the line-shaped light pattern scanned as described above with an event camera, events are outputted separately for both transparent objects and transparent portions, even if at least part of the object being measured is transparent. This offers the advantage of enabling separation between the pattern imaged against the background and the pattern imaged within the transparent portion.

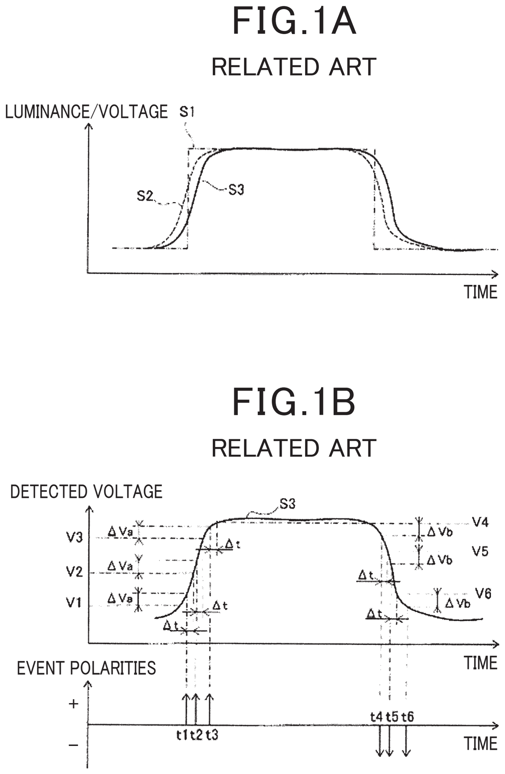

In the measurement method that scans a line-shaped light pattern over an object, as exemplified in Fig. 1A, the actual luminance changes S2 become obtuse compared to the ideal luminance changes S1, which changes in a rectangular manner during the passage of the line-shaped light pattern. Consequently, the voltage changes S3 in the voltage V detected and outputted from the detector, which are detected according to the actual luminance changes S2, also becomes obtuse. This is partly due to the effects of factors such as blurring and frequency filtering of signals outputted from the detector.

For pixels exhibiting luminance changes, as described above, event data of positive polarity (hereinafter also referred to as ON event data) is outputted in response to the detected voltage changes S3 when positive luminance changes are caused, while event data of negative polarity (hereinafter also referred to as OFF event data) is outputted when negative luminance changes are caused.

Specifically, as exemplified in Fig. 1B, the ON event data are outputted at a time instant t₁ when the detection voltage V becomes greater than a reference voltage V₁, which serves as an event detection threshold, and a voltage difference between the detection voltage V and the reference voltage V₁ is equal to or larger than a threshold ΔVa.

Subsequently, after a dead time Δt has passed from the time instant t1, the reference voltage is reset to V2. And at a time instant t2, when the detection voltage V is greater than a reference voltage V2 and a voltage difference between the detection voltage V and the reference voltage V2 is equal to or greater than the threshold ΔVa, ON event data is outputted again.

Subsequently, at a time instant t3, after the dead time Δt has passed from the time instant t2, the reference voltage is reset to V3. When the detection voltage V becomes greater than the reference voltage V3 and a voltage difference between the detection voltage V and the reference voltage V3 reaches or exceeds the threshold ΔVa, ON event data are outputted again.

In contrast, after the dead time Δt has passed from the time instant t3, the reference voltage is reset to V4. After the detection voltage V peaks at a time instant t4 when the detection voltage V is less than the reference voltage V4 and a voltage difference between the detection voltage V and the reference voltage V4 is greater than or equal to the threshold ΔVb, OFF event data are outputted.

Subsequently, after the dead time Δt has passed from the time instant t4, the reference voltage is reset to V5. At a time instant t5, when the detection voltage V is smaller than the reference voltage V5 and a voltage difference between the detection voltage V and the reference voltage V5 reaches or exceeds the threshold ΔVb, OFF event data are outputted again.

Subsequently, after the dead time Δt has passed from the time instant t5, the reference voltage is reset to V6. At a time instant t6 when the detected voltage V is smaller than the reference voltage V6 and a voltage difference between the detected voltage V and the reference voltage V6 is greater than or equal to the threshold ΔVb, OFF event data are outputted again.

By the light sectioning method which uses the event data, the three-dimensional shape of an object being measured can be measured based on the OFF event data detected immediately after the passage of the line-shaped light pattern (i.e., the first OFF event data following the peak of the detection voltage V: in the example of Fig. 1B; i.e., the OFF event data outputted at the time instant t₄ in Fig. 1B).

By the way, in recent years, as mentioned above, there has been a demand for further acceleration of three-dimensional measurement performed by event cameras using the light sectioning method. To meet this demand, accelerating the scanning speed of the line-shaped pattern is considered as one countermeasure to achieve further acceleration of the three-dimensional measurement.

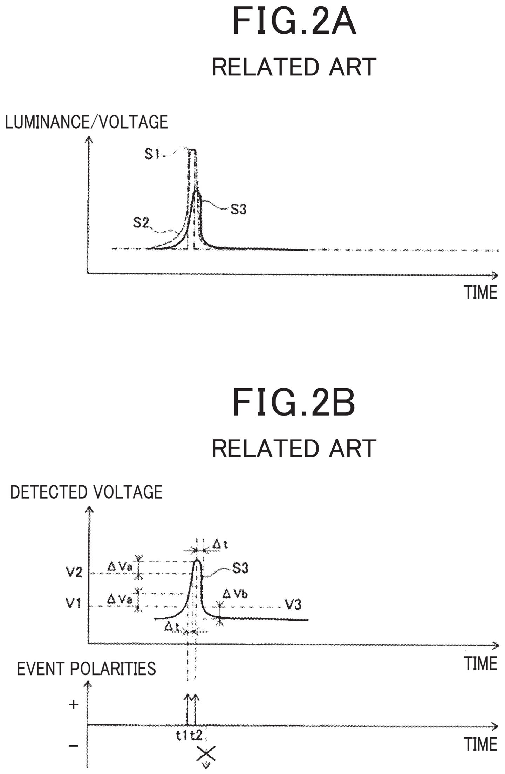

However, as illustrated in Fig. 2A, increasing the scanning speed of the line-shaped light pattern may cause the detection voltage V to decrease sharply without reaching its peak. In such a case, the line-shaped light pattern may pass through during the dead time Δt, resulting in no output of OFF event data.

To be specific, as illustrated in Fig. 2B, ON event data are outputted at a time instant t2 when the detection voltage V is greater than the reset reference voltage V2 and a voltage difference between the detection voltage V and the reference voltage V2 reaches or exceeds the threshold ΔVa. Subsequently, if the detection voltage V decreases sharply before the dead time Δt elapsing from that time instant t₂, the reference voltage is reset to a lower value V₃. As a result, the voltage difference with respect to the reference voltage V₃ may not reach or exceed the threshold ΔVb. In such a case, OFF event data will not be outputted.

In other words, in the three-dimensional measurement using the light sectioning method with the OFF event data, the scanning speed of the line-shaped pattern is constrained by the dead time Δt. This poses the problem that it is difficult to further increase the speed of three-dimensional measurement.

On the other hand, by employing the ON event data in performing three-dimensional measurements, the constraints imposed by the aforementioned dead time Δt can be eliminated.

However, the voltage changes detected at the pixel level may be smoothed due to the effects of blurring or frequency filters, etc. In such cases, multiple ON event data points may be output consecutively, as seen in the ON event data at times t₁, t₂, and t₃ in Fig. 1B or at times t₁ and t₂ in Fig. 2B, potentially including event noise attributable to blurring or frequency filtering. In such circumstances, if a three-dimensional measurement is performed based on event noise, there is a problem that the accuracy of the three-dimensional measurement deteriorates.

### Summary

In light of the foregoing situations, there is a demand to achieve further acceleration of three-dimensional measurement without compromising its measurement accuracy, in order to resolve the foregoing issues.

According to the present disclosure, one mode is three-dimensional measurement apparatus (10), including:
a light projection device (20) configured to project a line-shaped light pattern (P) onto an object (R) being measured, such that the object is scanned by the line-shaped light pattern (P);
an imaging unit (30) configured to two-dimensionally image the object (R), pixel by pixel, at irregular intervals while the line-shaped light pattern (P) is projected to the object(R); and
a measurement unit (40) configured to measure a three-dimensional shape of the object (R) based on image data of the object (R) imaged by the imaging unit (30) by applying a light-section method to the image data.

The imaging unit (30) is provided with an imaging element (302) configured to have previously set two-dimensional coordinate positions and output event data, the event data being generated at pixels (PX) subjected to changes in luminance of the light reflected from the object (R) by being projected by the light projection device, (20) the event data being associated with two-dimensional coordinate positions among the previously set two-dimensional coordinate positions, the event data being positive-polarity event data when the luminance changes to be brighter; and

The measurement unit (40) is configured to measure a three-dimensional shape of the object (R) in accordance with the light-sectioning method, based on selected positive-polarity event data, wherein the selected positive-polarity event data are provided, pixel by pixel, by removing, among the plurality of positive-polarity event data at each of the pixels (PX) of the imaging element (30), first positive-polarity event data (e.g., data at ts2) immediately followed by second positive-polarity event data (e.g., data ts3) with a time difference (ΔTs) between the first and second positive-polarity event data, the time difference (ΔTs) being less than or equal to a predetermined threshold (ΔTsth).

Another mode is provided as a three-dimensional measurement method, including steps of:
projecting a line-shaped light pattern (P) onto an object (R) being measured, such that the object (R) is scanned by the line-shaped light pattern (P);
two-dimensionally imaging the object (R), pixel by pixel, at irregular intervals while the line-shaped light pattern (P) is projected to the object; and
measuring a three-dimensional shape of the object (R) based on image data of the object imaged by an imaging unit (30) by applying a light-section method to the image data, wherein the imaging unit (30) is provided with an imaging element (302) configured to have previously set two-dimensional coordinate positions and output event data, the event data being generated from pixels (PX) subjected to changes in luminance of the light reflected from the object (R), the event data being associated with two-dimensional coordinate positions among the previously set two-dimensional coordinate positions, the event data being positive-polarity event data when the luminance changes to be brighter.

The measurement step is configured to measure a three-dimensional shape of the object (R) in accordance with the light-sectioning method, based on selected positive-polarity event data, wherein the selected positive-polarity event data are provided, pixel by pixel, by removing, among the plurality of positive-polarity event data at each of the pixels (PX) of the imaging element (30), first positive-polarity event data (e.g., data at ts2) immediately followed by second positive-polarity event data (e.g., data ts3) with a time difference (ΔTs) between the first and second positive-polarity event data, the time difference (ΔTs) being less than or equal to a predetermined threshold (ΔTsth).

In the present disclosure, attention is focused on the time difference between multiple positive-polarity event data outputs for the same pixel during the passage of a line-shaped light pattern and the immediately subsequent positive-polarity event data output. Based on the positive-polarity event data excluding those where this time difference falls below a predetermined threshold, the three-dimensional shape of the object being measured is measured using the light sectioning method.

Event noise, which is output as positive-polarity event data due to factors such as blurring or frequency filters, is continuously output immediately before the passage of a line-shaped light pattern. This suggests that such event noise can be assumed to be an event where the time difference with the positive-polarity event data output immediately after a certain event data is relatively short. Therefore, to achieve further acceleration of three-dimensional measurement, positive-polarity event data can be adopted to increase the scanning speed. That is, even when performing three-dimensional measurement based on positive-polarity event data, event data where the aforementioned time difference falls below a predetermined threshold can be excluded as continuous event noise from the multiple positive-polarity event data output continuously. Through this noise removal, three-dimensional measurement based on event noise can be prevented. Consequently, further acceleration of three-dimensional measurement can be achieved without compromising measurement accuracy.

The foregoing predetermined threshold may be set according to the passage time of the line-shaped light pattern. During the passage of the line-shaped light pattern, luminance peaks at that pixel, making it difficult to output an event. That is, the positive-polarity event data to be adopted can be assumed to be event data where no subsequent positive-polarity event data is output, or event data where the time difference with the positive-polarity event data output immediately after the occurrence of a certain event data is equal to or greater than the passage time of the line-shaped light pattern. Therefore, by setting the predetermined threshold value according to the passage time of the line-shaped light pattern, the predetermined threshold value can be set to match the increased scanning speed. As a result, event noise can be removed more appropriately.

The three-dimensional shape of the object being measured may be measured by the light sectioning method based on positive-polarity event data, excluding event data where the time difference between the occurrence of a certain event data and the positive-polarity event data output immediately thereafter at the same pixel is below a predetermined threshold, and event data deemed to be isolated event data points.

Positive-polarity event data judged to be isolated (outlier) event data points may be treated as noise events. That is, such positive-polarity event data isolated in terms of occurrence time may also have a time difference exceeding the predetermined threshold with positive-polarity event data output immediately after a certain event data. For this reason, utilizing a filter for removing isolated event data points (e.g., an SOR (statistically outlier removal) to eliminate them can further enhance the measurement accuracy of three-dimensional measurements.

### Brief Description of Drawings

In the accompanying drawings:
Fig. 1A is a graph exemplifying time and luminance relationships among ideal luminance changes S1, actual luminance changes S2, and voltage changes S3 detected responsively to the actual luminance change S2, which are caused at a single pixel when a line-shaped light pattern passes over the single pixel;
Fig. 1B is a graph explaining event timings at which events are caused respectively depending on the changes in the detected voltage shown in Fig. 1A;
Fig. 2A is a graph exemplifying a temporal and luminance-amplitude relationship among ideal luminance changes S1, actual luminance changes S2, and voltage changes S3 of the voltage, which are caused when the line-shaped light pattern passes over the single pixel at a speed faster than that employed in Fig. 5A;
Fig. 2B is a graph explaining timings of events outputted in response to the changes in the detected voltage exemplified in Fig. 2A;
Fig. 3 is a block diagram outlining the configuration of a 3D (three-dimensional) measurement apparatus according to an embodiment;
Fig. 4 is an illustration explaining how a line-shaped (i.e., linear) light pattern is projected onto and scanned on an object being measured, wherein the object is transparent for the sake of easier understanding of the scanned line-shaped light pattern;
Fig. 5 is an illustration pictorially showing a positional relationship among a light projector, an imaging unit and an object being measured;
Fig. 6 is a block diagram outlining the configuration of the imaging unit;
Fig. 7 is a block diagram outlining the configuration of the measurement unit;
Fig. 8 is a time-sequential graph showing a plurality of ON event data outputted time-sequentially at a single pixel in an imaging unit during scanning the line-shaped light pattern;
Fig. 9A is an illustration explaining how ON event data are outputted, prior to event noise removal, at respective pixels mapped along a horizontal one line;
Fig. 9B is an illustration explaining ON event data which have remained after removing data of sequential event noise from the ON event data shown in Fig. 9A; and
Fig. 9C is an illustration explaining ON event data which have remained after removing data of event noise referred to as isolated event data points, from the ON event data shown in Fig. 9B.

### Description of the Preferred Embodiments

With reference to the accompanying drawings, an embodiment of a three-dimensional measurement apparatus and a three-dimensional measurement method according to the present disclosure will now be described.

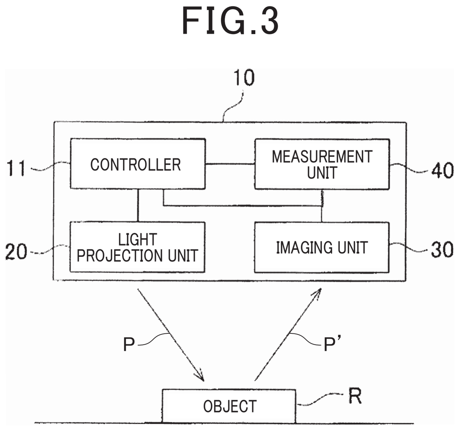

Fig. 3 shows a three-dimensional (3D) measurement apparatus 10 of the present embodiment, which is configured to measure the three-dimensional shape R of an object being measured.

As shown in Fig. 3, the 3D measurement apparatus 10 is equipped with a controller 11 which controls overall operation, a light projector 20 which projects a line-shaped light pattern (hereinafter, referred as a light pattern P onto an object R being measured and scans the light pattern P, an imaging unit 30 which images the object R onto which the light pattern P is projected and scanned, and a measurement unit 40 which applies a light sectioning method to image data outputted from the imaging unit 30 to measure the 3D shape of the object R.

The 3D measurement apparatus 10 thus configured may, for example, be mounted on a robotic hand. This enables measurement of the three-dimensional shape of an object R being measured, such as a workpiece, which moves relative to the hand at high speed. The relative movement refers to the relative motion between the movement of the 3D measurement apparatus 10 mounted on the robotic hand and the high-speed movement of the object being measured R. When the position of the 3D measurement apparatus 10 is fixed, the relative movement is represented by the movement of the object R being measured.

In the present embodiment, the light controller 11 is primarily configured as a microcontroller. More specifically, the light controller 11 is provided with a CPU 102, a system bus 104, an input/output interface 106, a ROM 108, a RAM 110 and a storage unit 112 such as non-volatile memory, and the like, and is configured as an information processing device. The storage unit 112 contains various programs executed by the controller 11, responsible for robot control, and programs for executing processing specific to this embodiment, stored in a manner readable by the controller 11. The latter programs include programs concerning the control of the light projector 20 and programs for executing control processing utilizing three-dimensional measurement results, executed by the measurement unit 40.

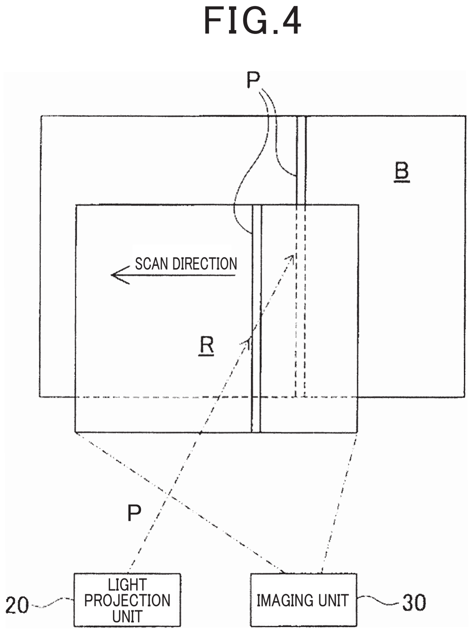

The light projector 20 is controlled by controller 11 and configured to scan a line-shaped light pattern P consisting of a linearly collimated laser beam, whose luminance does not vary in the vertical direction, from right to left at a constant scanning speed, as illustrated in Fig. 4. Fig. 4 illustrates a state where the line-shaped light pattern P, projected by the light projector 20 to scan the transparent object R being measured, is also projected onto the background object B after passing through the object being measured R. Moreover, the light projector 20 may be configured to scan a line-shaped light pattern, whose luminance does not change in a first direction (e.g., the left-right direction), across a second direction (e.g., from top to bottom) at a constant scanning speed. The processing step involving the light projector 20 projecting to scan the line-shaped light pattern P may correspond to an example of a 'projection step'.

The imaging unit 30 is basically configured as an event camera, which is provided with an imaging element 30A that outputs event data (specifically, two-dimensional point data, time, and the polarity of the luminance change) containing two-dimensional point data identifying the position of pixels exhibiting luminance changes upon light reception. It is configured to generate an image from the event data outputted by the imaging element.

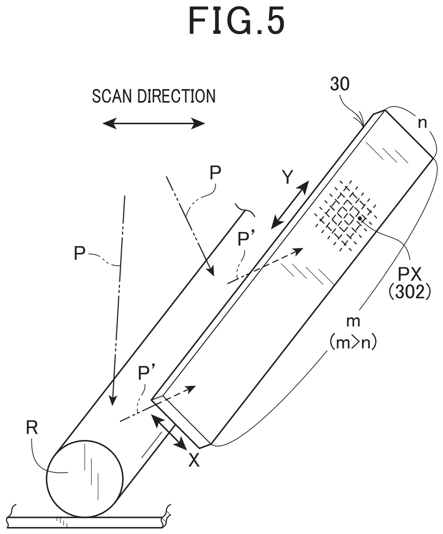

More specifically, as shown in Fig. 5, the imaging unit 30 is provided with a detector 30A (serving as an imaging element) having an array of pixels PX arranged in a rectangular two-dimensional configuration. In the present embodiment, the array of pixels PX comprises, for example, m elements horizontally (Y-axis direction) by n elements vertically (X-axis direction) (m > n: m and n are positive integers). Each of the multiple pixels PX possesses an independent light detection mechanism.

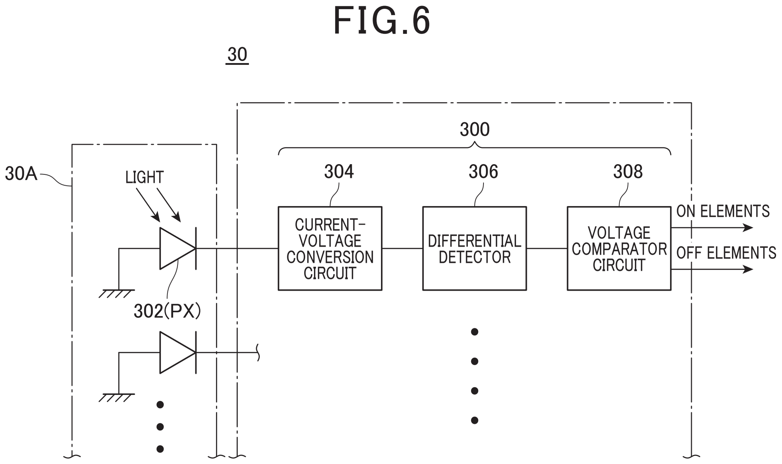

The light detection mechanism of each pixel PX, for example, as shown in Fig. 6, is provided with a photoconductive element 302 that converts incident light into current, a current-voltage conversion circuit 304 that converts this current into voltage, and a differential detector 306 that detects the difference between this voltage and a reference voltage. Furthermore, the light detection mechanism of each pixel PX includes a voltage comparator circuit 308 which outputs event data of positive or negative polarity when the difference voltage detected by the difference detector 306 exceeds a positive or negative threshold. Thus, the imaging unit 30 also possesses the configuration of an event camera similar to conventional ones.

Therefore, in imaging unit 30, for each pixel unit in the captured image, during the scanning projection of line-shaped light pattern P, when a positive luminance change occurs such that the voltage difference with the reference voltage set each time as described above becomes equal to or greater than a threshold, positive polarity event data (ON event data) is output. Conversely, when a negative luminance change occurs such that the foregoing voltage difference becomes equal to or greater than the threshold, negative polarity event data (OFF event data) is outputted. By plotting the two-dimensional point data of multiple event data outputs within a fixed period as individual points on a predetermined plane, image data capturing the object being measured R can be generated. The imaging unit 30 is configured to output this generated image data or event data (two-dimensional point data, time, polarity of luminance change) to the measurement unit 40. The processing steps within the imaging unit 30, which captures the object being measured R onto which the line-shaped light pattern P is projected, may correspond to an example of an imaging step.

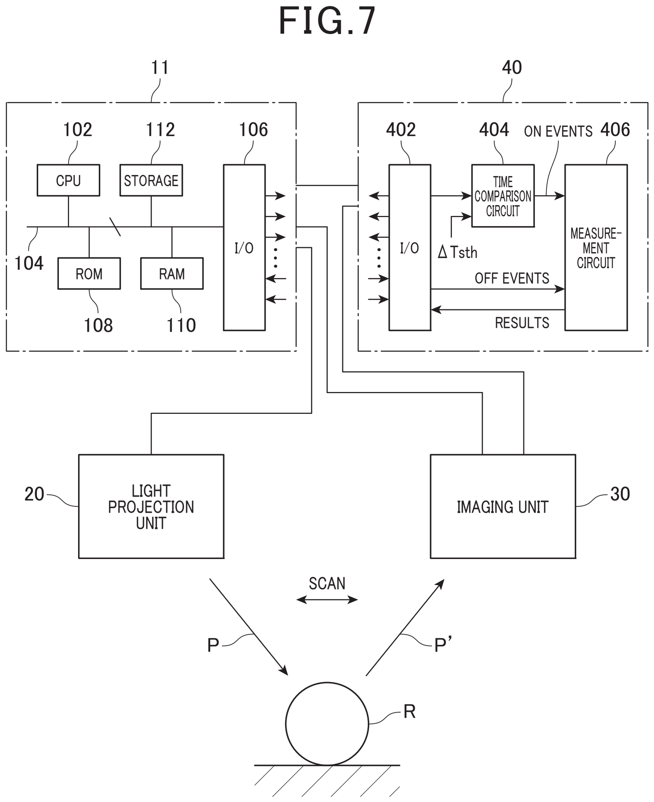

Furthermore, a measurement unit 40, as shown in Fig. 7, is provided with an interface 402 that receives input of positive and negative polarity event data generated by the imaging unit 30 and outputs measurement result signals to the controller 11. This measurement unit 40 further includes a time comparison circuit 404 that receives only positive polarity event data and a measurement circuit 408. The time comparison circuit 402 uses the input positive polarity event data to compare a time difference between the positive polarity event data outputted immediately after the passage of a line-shaped pattern over the same pixel and a predetermined threshold Tth. The time comparison circuit 402 generates positive polarity event data excluding those where this time difference is less than or equal to the threshold Tth. The value of this time threshold Tth is controllable by the controller 11.

The measurement unit 40, controlled by controller 11, measures the three-dimensional shape of the object being measured R based on an image captured by imaging unit 30 of the object being measured R while the line-shaped light pattern P is projected from light projector 20, using a light sectioning method. More specifically, triangulation is performed to measure the three-dimensional shape by determining the light-receiving angle of the imaging unit 30 and the projection angle of the line-shaped light pattern P by the light projector 20 based on the event-occurrence pixels and their timing. It is noted that the processing step within the measurement unit 40, which measures the three-dimensional shape of the object being measured R captured by the imaging unit 30 using the light sectioning method, may correspond to an example of a measurement step.

The three-dimensional measurement method in the present embodiment will now be described in detail with reference to the drawings.

In the present embodiment, in order to make the three-dimensional measurement faster by using the event camera, the scanning speed of the line-shaped light pattern P by the projection unit 20 is increased. Due to this increased scanning speed, as described in Fig. 2B, luminance changes may occur during the dead time Δt. Consequently, OFF event data may cease to be outputted. Therefore, in three-dimensional measurement employing OFF event data, measurement accuracy may be reduced.

Therefore, in the present embodiment, by adopting ON event data, not only is the constraint imposed by the dead time Δt eliminated, but also event noise is removed from the multiple ON event data continuously output as described above immediately before the passage of line-shaped light pattern P, thereby enabling three-dimensional measurement.

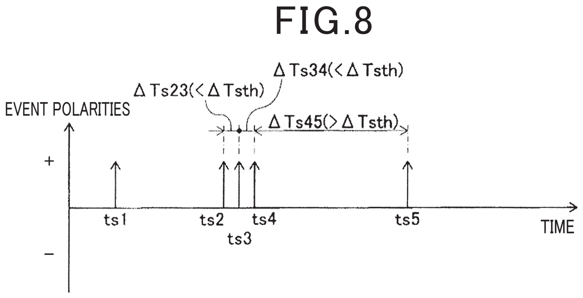

For example, as illustrated in Fig. 8, during scanning of line-shaped light pattern P, multiple ON event data outputs are generated for a single pixel (i.e, a single imaging element). Fig. 8 illustrates an example where, following two consecutive event noises at times ts2 and ts3, the ON event data to be adopted is output at time ts4, while random event noises caused by stray light and other undesirable factors, are outputted at times ts1 and ts5.

Event noise output as ON event data due to factors such as blurring or frequency filters is continuously outputted immediately before the passage of the line-shaped (linear) pattern P. Consequently, it can be assumed that this is an event where the time difference ΔTs with the immediately and subsequently outputted ON event data is relatively short. As can be seen from Fig. 8, the ON event data at time ts2, which is event noise occurring immediately after time ts1, has a relatively short time difference ΔTs23 from the subsequent ON event data at time ts3.

Similarly, the ON event data at time ts3, which is continuous event noise, has a relatively short time difference ΔTs34 with the subsequent ON event data at time ts4. The time difference ΔTs23 and the time difference ΔTs34 become sufficiently short relative to the passage time of line-shaped light pattern P (the time during which the foregoing ideal luminance change S1 occurs). On the other hand, the ON event data at time ts4, which should be adopted, is not output until the line-shaped light pattern P passes. Consequently, the time difference ΔTs45 with the ON event data at the immediately subsequent time ts5 becomes longer than the time of passage of the line-shaped light pattern P.

Hence, in the present embodiment, the measurement unit 40 performs processing to remove as noise events those multiple ON event data output for the same pixel during the passage of line-shaped light pattern P, where the time difference ΔTs between an ON event data and the immediately following ON event data is below a predetermined threshold ΔTsth. In the present embodiment, events are less likely to be output during the passage of line-shaped light pattern P. For this reason, the passage time of line-shaped light pattern P is adopted as the predetermined threshold ΔTsth.

In the time sequence exemplified in Fig. 8, when the positive-polarity event data obtained at the time ts2 is assigned to the first positive-polarity event data, the positive-polarity event data obtained at the time ts3 serves as the second positive-polarity event data which immediately follows the first positive-polarity event data. The same approach as the foregoing can be applied to the positive-polarity event data obtained at the times ts3 and ts4 (specifically, data obtained at the time ts3 serves as the first positive-polarity event data and data obtained at the time ts4 serves as the second positive-polarity event data), and at the times ts4 and ts5.

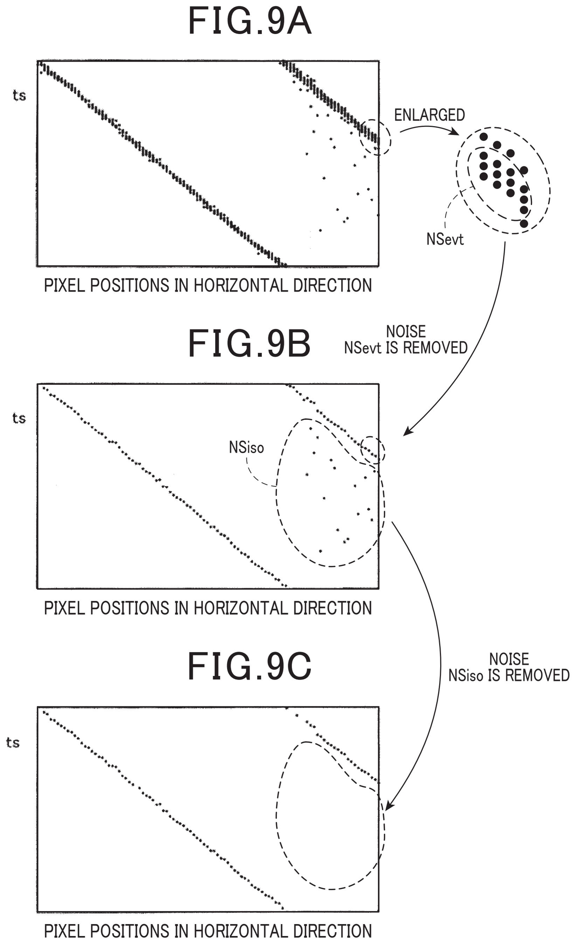

Thus, for example, with respect to a horizontal line, when ON event data is outputted from each pixel (imaging element) as illustrated in Fig. 9A, continuous event noise can be removed by eliminating event data where the time difference ΔTs is below the predetermined threshold ΔTsth (see Fig. 9B).

Furthermore, in measurement unit 40, to further enhance the measurement accuracy of three-dimensional measurement, processing is performed to remove isolated ON event data identified as noise events from the multiple ON event data from which continuous event noise has been removed, utilizing an outlier removal filter (e.g., an SRO filter, etc.). This enables the removal of isolated noise events from the multiple ON event data, from which continuous event noise has been removed, as exemplified in Fig. 9B, for a single horizontal line (see Fig. 9C). It is noted that the horizontal axis in Figs. 9A - 9C indicates the position of pixels on a given horizontal line, while the vertical axis indicates the timing ts at which ON event data is output.

As described above, in the 3D measurement apparatus 10 and three-dimensional measurement method according to this embodiment, the ON event data for the same pixel, generated when the line-shaped light pattern P passes through, excluding event data where the time difference ΔTs between the subsequent ON event data output and the preceding ON event data is less than or equal to a predetermined threshold ΔTsth, is generated. Based on this ON event data, the three-dimensional shape of the object R being measured is measured using the light sectioning method.

Therefore, even when employing ON event data to accelerate scanning speed for the purpose of further increasing the speed of three-dimensional measurement, it is possible to exclude event data where the foregoing time difference ΔTs is below a predetermined threshold ΔTsth from the multiple ON event data continuously output, thereby treating it as continuous event noise. Consequently, the three-dimensional measurement based on event noise can be prevented. It is thus possible to achieve further acceleration of three-dimensional measurement without compromising its measurement accuracy.

In particular, in the present embodiment, the predetermined threshold ΔTsth can be set according to the passage time of line-shaped light pattern P. During the passage of the line-shaped light pattern P, it becomes difficult to output an event because the luminance peaks at that pixel. That is, the ON event data to be adopted can be assumed to be event data where no subsequent ON event data is output, or event data where the time difference ΔT_s with the immediately following ON event data output is equal to or greater than the passage time of line-shaped light pattern P. Therefore, by setting the predetermined threshold ΔTsth according to the passage time of line-shaped light pattern P, the predetermined threshold ΔTsth can be set to match the increased scanning speed. As a result, event noise can be removed more appropriately.

In addition, in the present embodiment, utilizing removal filters for removing isolated event data points, ON event data points deemed isolated amongst the multiple ON event data points from which continuous event noise has been removed is eliminated as a noise event. That is, from the multiple ON event data outputs for the same pixel during the passage of line-shaped light pattern P, the ON event data can be used by excluding event data where the time difference ΔTs with the immediately following output ON event data is below a predetermined threshold ΔTsth, and event data deemed isolated event data points. In other words, based on this ON event data, the three-dimensional shape of the object being measured R is measured using the light sectioning method.

Isolated ON event data, which are considered noise events, may also occur when the time difference ΔTs between them and the subsequent ON event data output immediately thereafter exceeds the predetermined threshold ΔTsth. Therefore, by utilizing a filter for the purpose of removing such isolated event data points to eliminate the ON event data, the measurement accuracy of the three-dimensional measurement can be further improved.

Moreover, the present invention is not limited to the foregoing embodiment and variations thereof, and may be embodied in a variety of other modifications as follows.
(1) The predetermined threshold ΔTsth is not necessarily set to coincide with the transit time of the line-shaped light pattern P. It may, for example, be set to be longer than the transit time of the line-shaped light pattern P, or it may be set to be slightly shorter than the transit time of the line-shaped light pattern P.
(2) The 3D measurement apparatus 10 may move while mounted on a robotic hand to measure the three-dimensional shape of a relatively moving object being measured. Alternatively, it may be used in a fixed state to measure the three-dimensional shape of an object being measured moving along a conveyor line.
(3) The 3D measurement apparatus 10 may be configured such that the light projector 20, imaging unit 30 and measurement unit 40 are separate entities, with the measurement unit 40 being configured as an information processing terminal capable of wireless or wired communication with the light projector 20 and imaging unit 30.
(4) Furthermore, in the foregoing embodiment, the time comparison circuit 406, which compares the time difference ΔTs between a positive-polarity event data and the subsequent event data with the threshold ΔTsth, is provided within the measurement unit 40, but this is just an example. This time comparison circuit 406 may be provided within the measurement unit 40 or within the controller 11.

### [Description of partial reference signs]

10: 3D measurement apparatus
11: controller
20: light projection device
30: imaging unit
40: measurement unit
P: light pattern(line-shaped light pattern)
R: object being imaged
ts1, ts2; ts2, ts3; ..., ts4, ts5: acquisition times at which first positive-polarity event data are acquired
ΔTs: time difference
ΔTsth: predetermined threshold

## Claims

1. A three-dimensional measurement apparatus (10), comprising:
a light projection device (20) configured to project a line-shaped light pattern (P) onto an object (R) being measured, such that the object is scanned by the line-shaped light pattern (P);
an imaging unit (30) configured to two-dimensionally image the object (R), pixel by pixel, at irregular intervals while the line-shaped light pattern (P) is projected to the object(R); and
a measurement unit (40) configured to measure a three-dimensional shape of the object (R) based on image data of the object (R) imaged by the imaging unit (30) by applying a light-section method to the image data,
wherein
the imaging unit (30) is provided with an imaging element (302) configured to have previously set two-dimensional coordinate positions and output event data, the event data being generated at pixels (PX) subjected to changes in luminance of the light reflected from the object (R) by being projected by the light projection device, (20) the event data being associated with two-dimensional coordinate positions among the previously set two-dimensional coordinate positions, the event data being positive-polarity event data when the luminance changes to be brighter; and
the measurement unit (40) is configured to measure a three-dimensional shape of the object (R) in accordance with the light-sectioning method, based on selected positive-polarity event data, wherein the selected positive-polarity event data are provided, pixel by pixel, by removing, among the plurality of positive-polarity event data at each of the pixels (PX) of the imaging element (30), first positive-polarity event data (e.g., data at ts2) immediately followed by second positive-polarity event data (e.g., data ts3) with a time difference (ΔTs) between the first and second positive-polarity event data, the time difference (ΔTs) being less than or equal to a predetermined thresho

2. The three-dimensional measurement apparatus (10) according to claim 1, wherein the predetermined threshold (ΔTsth) is set depending on a passing time of the line-shaped light pattern (P).

3. The three-dimensional measurement apparatus (10) according to claim 1, wherein the measurement unit (40) is configured to measure the three-dimensional shape of the object (R) in accordance with the light-sectioning method, based on selected positive-polarity event data, the selected positive-polarity event data including event data regarded as isolated event data points.

4. A three-dimensional measurement method, comprising steps of
projecting a line-shaped light pattern (P) onto an object (R) being measured, such that the object (R) is scanned by the line-shaped light pattern (P);
two-dimensionally imaging the object (R), pixel by pixel, at irregular intervals while the line-shaped light pattern (P) is projected to the object; and
measuring a three-dimensional shape of the object (R) based on image data of the object imaged by an imaging unit (30) by applying a light-section method to the image data, wherein the imaging unit (30) is provided with an imaging element (302) configured to have previously set two-dimensional coordinate positions and output event data, the event data being generated from pixels (PX) subjected to changes in luminance of the light reflected from the object (R), the event data being associated with two-dimensional coordinate positions among the previously set two-dimensional coordinate positions, the event data being positive-polarity event data when the luminance changes to be brighter,
wherein the measurement step is configured to measure a three-dimensional shape of the object (R) in accordance with the light-sectioning method, based on selected positive-polarity event data, wherein the selected positive-polarity event data are provided, pixel by pixel, by removing, among the plurality of positive-polarity event data at each of the pixels (PX) of the imaging element (30), first positive-polarity event data (e.g., data at ts2) immediately followed by second positive-polarity event data (e.g., data ts3) with a time difference (ΔTs) between the first and second positive-polarity event data, the time difference (ΔTs) being less than or equal to a predetermined threshold (ΔTsth).
